# EUROPEAN PATENT SPECIFICATION

(11) **EP 0 416 636 B1**
(45) Date of publication and mention of the grant of the patent: **04.12.1996**
(21) Application number: 90117224.7
(22) Date of filing: 06.09.1990
(51) Int. Cl.: B60K 5/04

(54) **A multi-cylinder internal combustion engine**
Brennkraftmotor mit mehreren Zylindern
Moteur à combustion interne à plusieurs cylindres

(30) Priority: 06.09.1989 JP 229373/89; 06.09.1989 JP 229374/89; 06.09.1989 JP 230681/89
(43) Date of publication of application: 13.03.1991
(73) Proprietor: YAMAHA HATSUDOKI KABUSHIKI KAISHA, Iwata-shi Shizuoka-ken, 438 (JP)
(72) Inventor: Okui, Kaoru, Iwata-shi, Shizuoka-ken 438 (JP); Kobayashi, Manabu, Iwata-shi, Shizuoka-ken 438 (JP)
(74) Representative: Grünecker, Kinkeldey, Stockmair & Schwanhäusser Anwaltssozietät

(56) References cited:
- EP-A- 0 281 693
- EP-A- 0 318 971
- DE-A- 2 149 444
- DE-C- 381 331
- US-A- 3 150 543

## Description

The present invention relates to a multi-cylinder internal combustion engine as indicated in the preamble portion of claim 1.

In vehicle engines there is a rotating member of larger diameter provided, such as a torque convertor or a clutch which will become bulky and its outer diameter will become large with the increase of the engine output. Conventionally this torque convertor or clutch (depending what type of transmission is used) is supported through the crankshaft resulting in an undesirable increase of the total engine height and, moreover, increasing the length of the engine in the direction of the crankshaft axis. Thus, the design freedom for accommodating the engine on the vehicle was affected and restrictions have occurred on the industrial design of the car, specifically undesirable in the field of passenger car manufacturing.

In some cases the engine, as a transverse engine, is mounted between a pair of left and right driving wheels inducing a lateral extension of the crankshaft substantially perpendicularly to the travelling direction of the car, adapted to drive said driving wheels through a transmission and a differential mechanism. In such a case it is necessary to keep the torque convertor or the clutch for the transmission apart from the axle shaft provided for transmitting the rotation of the differential mechanism to each of the driving wheels in order to prevent any interference with the differential mechanism or the axle shaft. Therefore the crankshaft, the torque convertor or clutch and the cylinder block have frequently been positioned relatively far distant from the differential mechanism and it was necessary to provide a large engine compartment which is undesirable from the viewpoint of vehicle height and vehicle design freedom.

A more compacted design of a multi-cylinder internal combustion engine is already derivable from EP-A-O 318 971 which shows an engine reflected in the preamble portion of claim 1. It is desired to further enhance the compactness of the layout of this engine, specifically in the area of the attachment of the differential mechanism.

Accordingly it is an objective of the present invention to further improve a multi-cylinder internal combustion engine as indicated above having a small total height and being easily accommodated within a small engine compartment, in particular suited to serve as a transverse engine having a row cylinder arrangement.

The afore-indicated objective is achieved by means of a multi-cylinder internal combustion engine as indicated in the preamble portion of claim 1, said engine being characterised in that, the gear system and the clutch system of the automatic transmission are accommodated in the differential casing with the one of a pair of axle shafts of the driving wheels extending outwards through said automatic transmission, whereas the output of the torque converter is transmitted to the automatic transmission through a chain mechanism.

The advantageous effects of the engine structure according to the present invention as indicated above are indicated hereinafter and result in a considerably compacted layout of the engine which enables to perfect the accommodation of a multi-cylinder engine, having for example six cylinders in a row, disposing said engine transversally in a vey small engine compartment. Since the main shaft of the transmission is disposed coaxially to the output shaft which, in turn, is positioned in parallel and slantly above the crankshaft, the rotating member of large diameter such as the torque convertor or the clutch are positioned on said output shaft and will not project downwardly from the engine. Moreover, as the cylinder block is inclined in such a manner that it covers the differential mechanism from the top, the height of the whole engine can be kept minimal even if a portion of the large reduction gear of the differential mechanism projects downwards. A main advantageous design feature attained through the present invention resides in the fact that it becomes possible to dispose the crankshaft very close to the differential mechanism as the output shaft on which the clutch or torque convertor is supported is located on a side of the crankshaft opposite to the position of the differential mechanism. Finally, due to the overlapping of an end of the crankshaft through the clutch or torque convertor it becomes possible to locate the output shaft very close to the crankshaft reducing the overall length of the engine in the direction perpendicularly to the crankshaft axis. Accordingly the acommodation of the engine in a small engine compartment as a transverse engine is facilitated and the design freedom for designing the vehicle is increased.

Advantageous embodiments of the present invention with respect to the relationship between the location of the output shaft, crankshaft and the axis of a differential mechanism which coincides with the driving front or rearwheel axle result in a further compacted structure of the engine.Thus, in case the axis of the differential mechanism is positioned lower than the axis of the crankshaft, the height of the whole engine can be kept small even if the portion of the large reduction gear of the differential mechanism projects downwardly, as the cylinder block is inclined in such a manner that it covers the differential mechanism from the top.

According to another preferred embodiment of the present invention, the total height of the engine can be further reduced in that the axis of the differential mechanism is also positioned above a horizontal plane containing the axis of the crankshaft, enabling to prevent a portion of the large reduction gear of the differential mechanism to project downwards.

Other preferred embodiments of the present invention are laid down in the other sub-claims.

Further objectives, features and advantages of the present invention will become more apparent from the following description of embodiments of the present invention in conjunction with the associated drawings wherein:
Figure 1 is a partially sectional side view of a multi-cylinder internal combustion engine not covered by the claims,
Figure 2 is a partially sectional plan view of the internal combustion engine of figure 1,
Figure 3 is a diagrammatic plan view of the engine of figure 1 in its built-in condition as a transverse engine in an engine compartment of a FF-vehicle,
Figure 4 is a partially sectional view of a multi-cylinder internal combustion engine according to an embodiment of the present invention,
Figure 5 is a side view (schematically) of the engine as shown in figure 4 in an built-in condition of the engine,
Figure 6 is a schematical side view of an internal combustion engine not covered by the claims being applied to a passenger car having a midship engine system,
Figure 7 is a view similar to figure 1 showing an internal combustion engine not covered by the claims,
Figure 8 is a partially sectional plan view similar to figure 2 not covered by the claims,
Figure 9 is a partially sectional side view of a multi-cylinder internal combustion engine similar to figure 1 and 7, not covered by the claims.

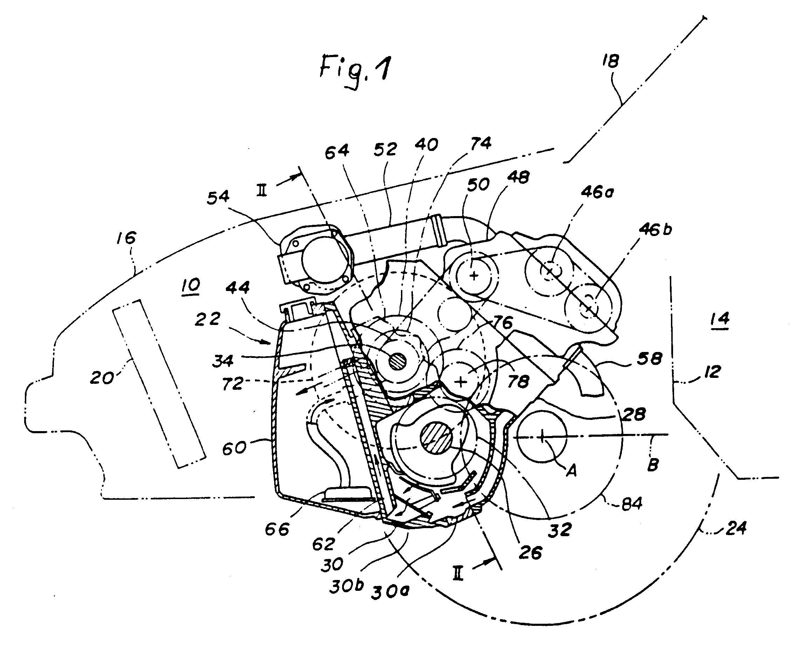

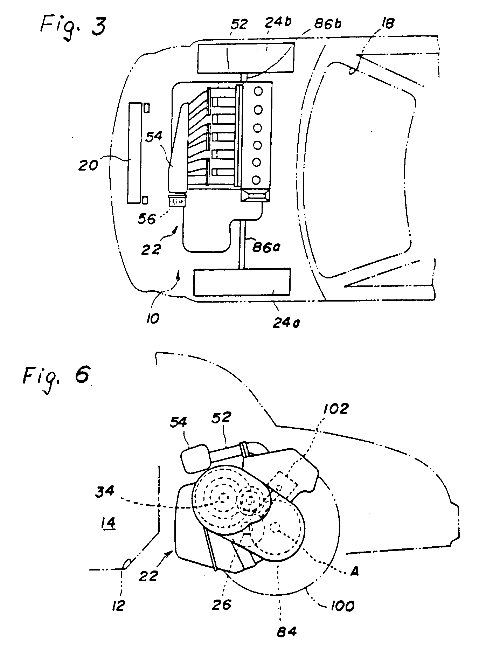

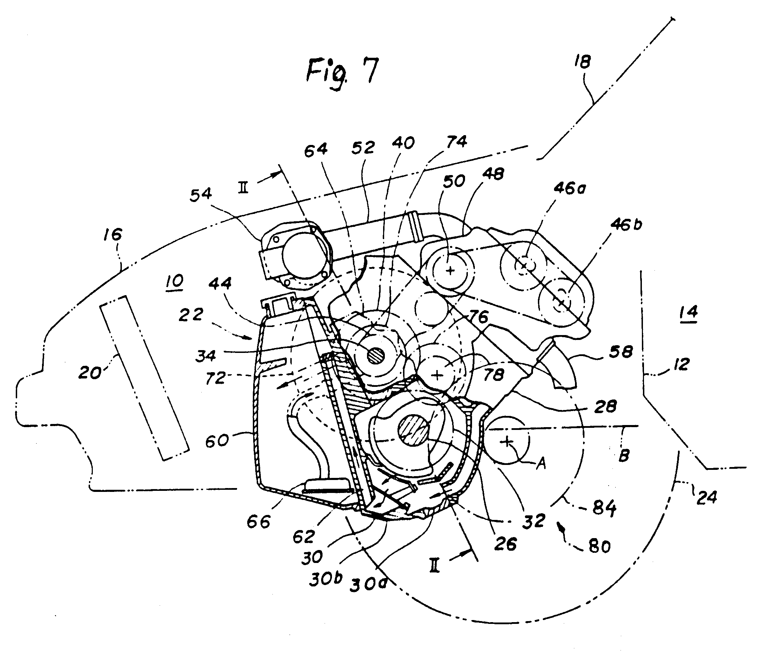

In the following the first embodiment, not covered by the claims, is explained together with a slight modification referring to figures 1 to 6, respectively. In this embodiment the present invention (with the exception of Fig 6) is applied to a passenger car equipped with a front-engine front-drive (FF) system. In figures 1 and 3 the engine compartment is denoted by the reference numeral 10, said engine compartment 10 being partitioned from a cockpit 14 at its rear portion by a floor panel 12 and, at its upperside, is covered by a hood 16. Reference numerals 18 and 20 refer to a windshield and radiator, respectively.

Within the engine compartment 10 a water-cooled six cylinder row engine 22 (parallel type) is accommodated. The engine 22 is positioned substantially in between both steering front wheels 24a and 24b positioned on both sides of the engine and the vehicle body as driving wheels 24.

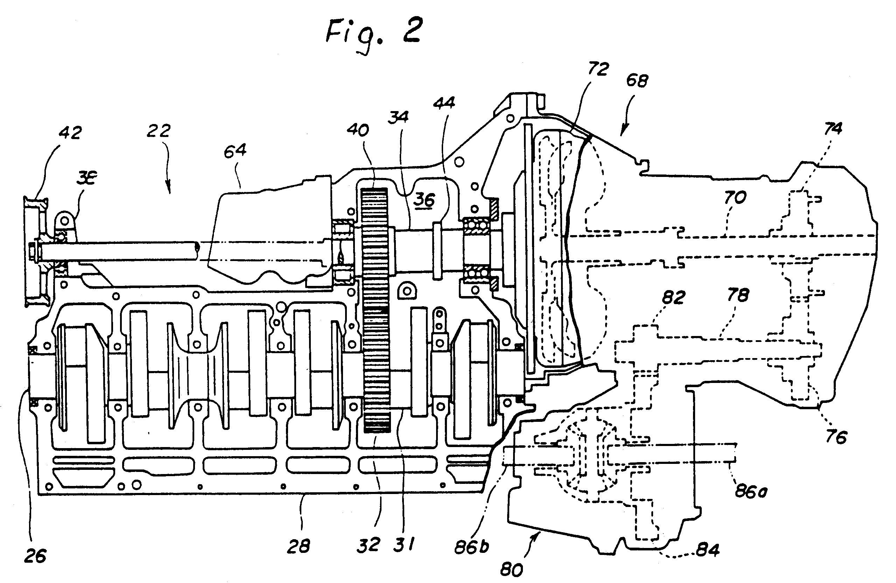

The engine 22 is mounted to the engine compartment 10 as a transverse engine disposed laterally on the vehicle thus, accordingly, a crankshaft 26 of the engine 22 is held by a crank case 28 and extends substantially perpendicularly to the travelling direction of the vehicle. As shown in figure 2 there are seven journal portions in total for rotatably supporting the crankshaft 26 provided between the six cylinders of the engine and at both ends of the crankshaft, said journal portions being held in between the cylinder block 28 and the crank case 30. A crank pin 31 for the second cylinder from the right side in figure 2 is held by a pair of crank arms, the one of which is shaped to constitute an engine output transmitting gear 32.

Taking the vehicle travelling direction as a basis, there is an output shaft 34 which is disposed slantly forwardly above the crankshaft 26 in parallel with the crankshaft 26 as shown in figures 1 and 2 wherein said output shaft 34 extends through a gear chamber 36 formed on the left upper front face (the right side in figure 2) of the cylinder block 28. The right end (left side in figure 2) of said output shaft 34 extends through a bearing portion 38 projected from the right upper front face (left upper front face in figure 2) of the cylinder block 28. The output shaft 34 supports a gear 40 which is in mesh with the engine output transmission gear 32 within the gear chamber 36 enabling the output shaft 34 to rotate continuously with the crankshaft 26.

On the right hand end side of the output shaft 34 a pulley 42 is fixed which is adapted to drive auxiliaries such as a water pump (not shown) for delivering engine cooling water, an oil pump (not shown) for power steering system or an air conditioning pump (not shown). Adjacent to the gear 40 the output shaft 34, moreover, supports a sprocket wheel 44, which is schematically shown only and is adapted to drive two overhead camshafts 46a and 46b. As shown in figure 1 on the top of the cylinder block 28 there is fastened a cylinder head 48 holding a countershaft 50 to which the rotation of the sprocket wheel 44 is transmitted. Consequently, the rotation of the countershaft 50 is transmitted to both camshafts 46a and 46b. In order to reduce the height of the engine 22 the cylinder block 28 is inclined backwards covering a drive axle/differential mechanism from above.

As shown in figure 3 there are six intake pipes 52 corresponding to each cylinder which extend forwardly from the top face of the cylinder head 48 and are connected to a surge tank 54 which, in turn, is connected to an air cleaner (not shown) through a throttle valve 56. The exhaust pipes bear the reference numeral 58 (figure 1).

The engine 22 is provided with a drysump lubrication system. An oil reservoir tank 60 is fastened on the front face of the crank case 30. That means the crank case 30 is composed of members 30a and 30b of the engine 22 which are joined together and the oil tank 60 is fastened to the front face of the member 30b.The lubricating oil collected within the bottom portion of the crank chamber formed between the crank case 30 and the cylinder block 28 is pumped up into the oil reservoir tank 60 by an oil pump 64 through an oil passage 62 formed through the member 30b. The oil contained in this oil reservoir tank 60 is sucked into the oil pump 64 through an oil strainer 66, force-fed to various lubricating points of the engine through an oil filter (not shown) and then is returned to the bottom portion of the crank chamber.The oil pump 64 is disposed midway on the output shaft 34 to be driven by the output shaft 34. That oil flow is marked by arrow marks in figure 1.

In case of the embodiment of figures 1 to 3 there is an automatic transmission 68 disposed on the left hand side of the cylinder block 28 and the crank case 30, having a main shaft 70 which extends coaxially with the output shaft 34. The rotation of the output shaft 34 is transmitted to the main shaft 70 through a well known transmission planetary gear system and a wet-type multi-disc clutch system arranged on this main shaft 70. The rotation of the main shaft 70 of the automatic transmission 68 is transmitted to the sub-shaft 78 through gears 74 and 76.

Slantly rearwards below the torque converter 72 a differential mechanism 80 is positioned the axis of which extends between left and right front wheels 24. As shown in figure 2 the small reduction gear 82 on the sub-shaft 78 is in permanent engagement with the large reduction gear 84 of this differential mechanism 80. The output of the differential mechanism 80 is transmitted to both front wheels 24 through a pair of left and right axle shafts 86a and 86b through constant velocity joints (not shown).

As shown in figure 1, in that case, an axis A of the differential mechanism 80 is at the same height as the axis of the crankshaft 26, i.e. coincides with a horizontal plane B containing both the axis of the crankshaft 26 and the axis of the differential mechanism 80. With respect to a notional vertical plane (not shown) containing the axis of the crankshaft 26 the output shaft 34 is disposed on a side of the crankshaft 26 opposite to the differential mechanism 80 enabling to increase the compactness of the engine in width wise direction, i.e. the travelling direction of the vehicle. Moreover, as shown through a dot-dash line in figure 1 the large reduction gear 84 of the differential mechanism 80 does not protrude downwards from the engine 22 leaving an increased distance to the ground and increasing the designed freedom for designing the vehicle. The inclination of the cylinder block to the rear in a manner that it covers the differential mechanism from above considerable adds to obtain a small overall height of the engine.

The output shaft 34 is positioned slantly forwardly above the crankshaft 26 and the crankshaft 26 is positioned between the output shaft 34 and the axis A of the differential mechanism 80.

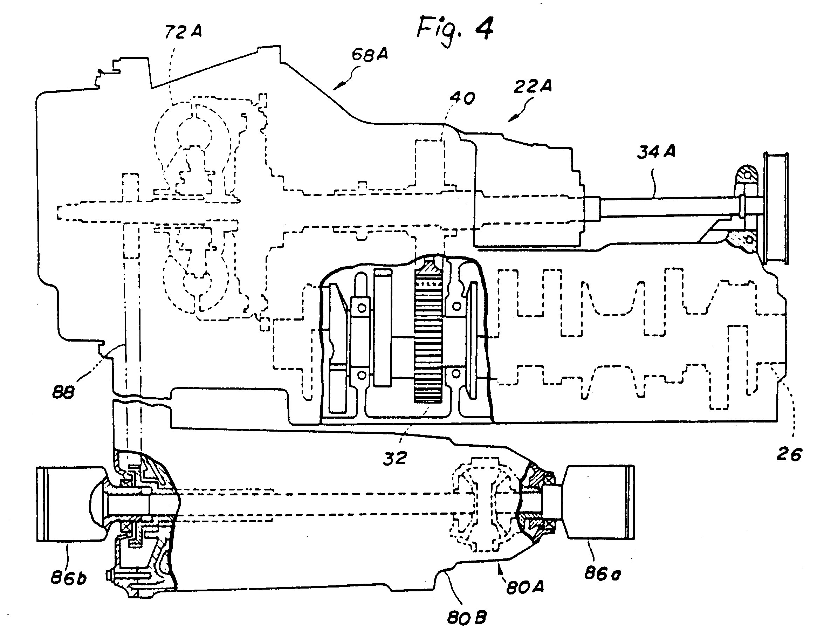

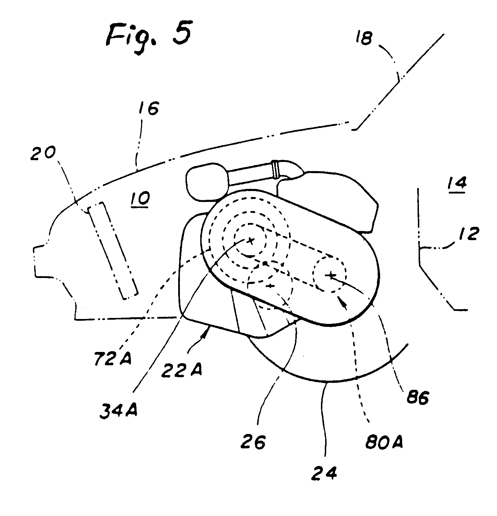

Figure 4 shows a partially sectional view of an embodiment of the present invention, whereas figure 5 is a side view of this embodiment showing the engine in its mounted condition as in-built in the engine compartment. In that case the engine 22A has a torque converter 72A for the automatic transmission 68A mounted at one end of the output shaft 34A, whereas the gear system and the clutch system of the automatic transmission system 68A are accommodated within the case 80B of the differential mechanism 80A with one of the axial shafts 86B extending through this gear system and the clutch system. With such an arrangement the output of the torque converter 72A is transmitted to the gear and clutch systems through a chain 88.

Another embodiment not covered by the claims is shown in figure 6 comprising the inventive engine being applied to a passenger car provided with a midship engine system, in the present case a rear drive system. In figure 6 the reference number 100 denotes rear wheels as a pair of left and right driving wheels whereas pistons are designated through 102. In figures 4 to 6 the same reference numerals are assigned to the same portions as in figure 1 and, therefore, their respective descriptions are not repeated again.

It should be considered that the torque converter 72 or 72A provided in the engine drive system of the present invention is not necessarily required to overlap the axis of the crankshaft 26 but may be such that it overlaps only the crank web in a side view along the axis of the crankshaft 26.

Since the torque converter 72,72A is mounted on the output shaft 34 which, in turn, is disposed slantly above the crankshaft 26 within structure according to the present invention the torque converter 72,72A does not project downwards from the engine and the total height of the engine can be reduced. Moreover, since the output shaft 34 supporting the torque converter 72,72A is disposed on a side with respect to the crankshaft 26 opposite to the differential mechanism 80,80A it becomes possible to arrange the crankshaft 26 sufficiently close to the differential mechanism 80,80A. Finally, since the torque converter 72,72A overlaps the crankshaft 26 in side view it becomes possible to arrange the output shaft (34) close to the crankshaft 26 enabling to reduce the engine dimensions in the longitudinal direction of the vehicle. Accordingly the engine 22 can be easily be mounted within a relatively small engine compartment and the design freedom for desigining the vehicle is increased.

Figure 7 shows another embodiment not covered by the claims similar to those of figure 1. As far as the layout of said embodiment does not vary beyond that shown in figure 1 the above description of the components applies as well and is not repeated again. The most relevant difference distinguishing the embodiment of figure 7 beyond those of figure 1 refers to the disposal of the differential mechanism 80 which, in that case, is positioned lower than the axis of the crankshaft 26, i.e. lower than a horizontal plane B containing the axis of the crankshaft 26. Although the position of the differential mechanism 80, in particular the large reduction gear 84 thereof will become lower accordingly, the total height of the engine 22 can be kept small as the cylinder block 28 thereof is inclined backwards in such a manner that it covers the differential mechanism 80 from above. Again the output shaft 34 is positioned slantly forwardly above the crankshaft 26 and the torque converter 72 therein overlaps the crankshaft 26 in side view, with the crankshaft 26 being positioned between the output shaft 34 and the axis A of the differential mechanism 80. Thus, the torque converter 72 having a large diameter does not interfere with the differential mechanism 80 or an axle shaft (not shown) enabling to dispose the output shaft 34 close to the crankshaft 26.

Even though the torque converter 72 in this embodiment has been shown to overlap the axis of the crankshaft 26 in side view it may be such that it overlaps the crank web, respectively.

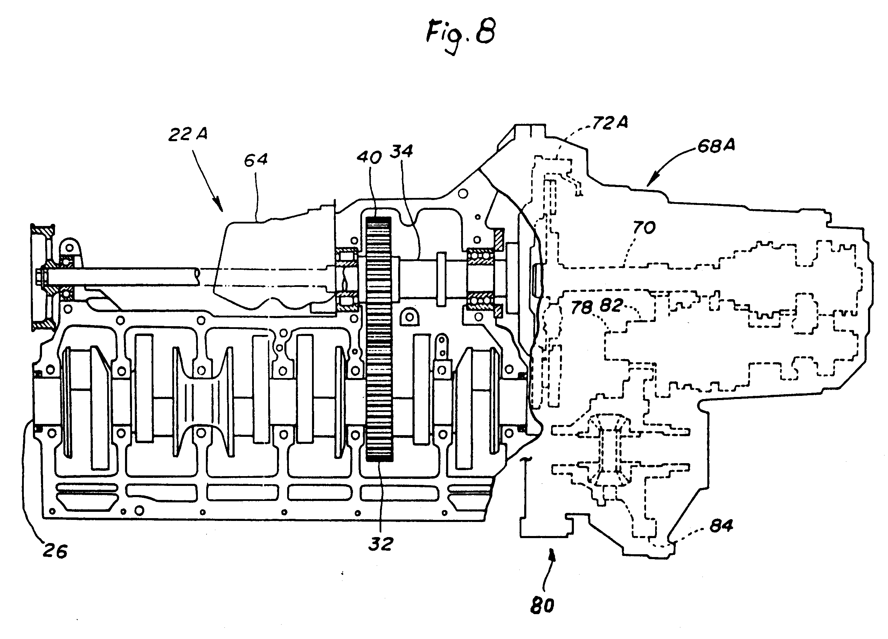

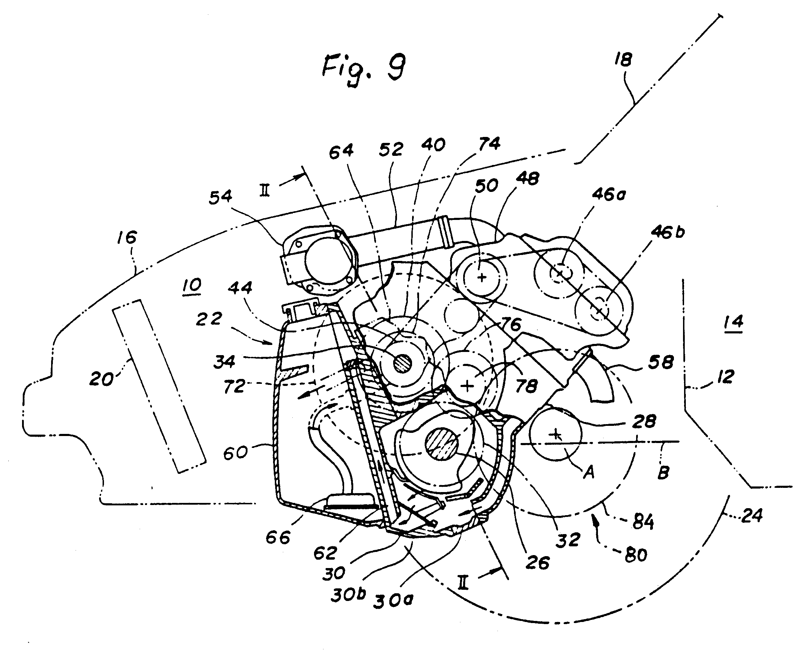

Another embodiment not covered by the claims (in plan view similar to figure 2) is shown in figure 8. This embodiment distinguishes in that a manual transmission 68A having a single disc dry foot clutch 72A forming the rotating member of large diameter is used instead of the automatic transmission 68. So far the same reference numerals were assigned to the same parts as in the embodiment of figure 2 and, accordingly, their descriptions are not repeated.
Finally yet another, embodiment not covered by the claims is shown in figure 9 disclosing the axis A of the diferential mechanism 80 to be located higher than the axis of the crankshaft 26, i.e. higher than a horizontal plane B which contains the axis of the crankshaft 26. Accordingly, the differential mechanism 80 having large reduction gear 84 of large diameter does not project downwards from the engine 22. Thus an increased compactness of the engine 22 is assured. As is evident said embodiments can also be combined with the provision of a manual transmission 68A and the layout shown in figure 8.

In view of the further aspects and features of said embodiment the above explanations given with respect to figures 1 and 7 apply as well.

Again, since the main shaft 70 of the transmission 68 is disposed on the level of the output shafts 34 which, in turn, is postioned in parallel and slantly above the crankshaft 26 the torque converter or the clutch, positioned on that level will not project downwards from the engine 22. Moreover, since the axis of a differential mechanism 80,80A is also positioned higher than the crankshaft 26 the large reduction gear of the differential mechanism 80,80A, does not project downwards from the engine resulting in a compact design of said engine having a reduced overall height. The output shaft 34 supporting the torque converter or the clutch is positioned on a side with respect to the crankshaft 26 opposite to the differential mechanism 80 and, therefore, it is possible to arrange the crankshaft 26 sufficiently close to the differential mechanism 80 and, moreover, as the clutch or torque converter overlaps the crankshaft in the side view an arrangement of the output shaft 34 close to the crankshaft 26 is facilitated reducing the dimensions of the engine 22 in longitudinal direction of the vehicle. Accordingly, the engine can be easily mounted within a small engine compartment.

## Claims

1. An multi-cylinder internal combustion engine (22) for vehicles for accommodation in an engine compartment (10) in transverse arrangement substantially in between a pair of left and right driving wheels (24a,24b,100), with a crankshaft (26) extending substantially perpendicularly to the travelling direction of the vehicle transmitting the engine output to said pair of left and right driving wheels (24a,24b,100) through an automatic transmission (68,68A) and a differential mechanism (80,80A), and an output shaft (34) which is disposed in parallel with the crankshaft (26) and is driven by the crankshaft (26) wherein the differential mechanism (80,80A), with respect to a vertical plane containing the axis of the crankshaft (26), is disposed on a side opposite to the output shaft (34) which, in turn, supports a torque converter (72,72A) radially overlapping the end of the crankshaft/crank web-structure (26,32) while the cylinder block (28) is inclinded such that it covers the differential mechanism (80,80A) from above, **characterised in that,** the gear system and the clutch system of the automatic transmission (68,68A) are accommodated in the differential casing (80B), with the one of a pair of axle shafts (86A,86B) of the driving wheels (24a,24b,100) extending outwards through said gear and clutch systems, whereas the output of the torque converter (72,72A) is transmitted to the automatic transmission through a chain mechanism (88).

2. A multi-cylinder internal combustion engine as claimed in claim 1, **characterised in that,** the axis (A) of the differential mechanism (80,80A) is positioned higher than a horizontal plane (B) containing the axis of the crankshaft (26).

3. A multi-cylinder internal combustion engine as claimed in claim 1, **characterised in that,** the axis (A) of the differential mechanism (80,80A) is positioned lower than a horizontal plane (B) containing the axis of the crankshaft (26).

4. A multi-cylinder internal combustion engine as claimed in claim 1, **characterised in that,** the axis (A) of the differential mechanism (80,80A) is positioned substantially at the same height as the axis of the crankshaft (26) coinciding with horizontal plane (B) containing the axis of the crankshaft (26).

## Patentansprüche

1. Mehrzylinder-Brennkraftmaschine (22) für Fahrzeuge zur Aufnahme in einem Motorraum (10) in Queranordnung im wesentlichen zwischen einem Paar von linken und rechten Antriebsrädern (24a,24b,100), mit einer Kurbelwelle (26), die sich im wesentlichen quer zur Fahrtrichtung des Fahrzeugs erstreckt und den Motorausgang auf dieses Paar von linken und rechten Antriebsrädern (24a,24b,100) über ein Automatikgetriebe (68,68A) und ein Differential (80,80A) überträgt, einer Abtriebswelle (34), die parallel zur Kurbelwelle (26) ausgerichtet und von der Kurbelwelle (26) angetrieben ist, wobei das Differential (80,80A) in Bezug auf einer senkrechten Ebene, die die Achse der Kurbelwelle (26) enthält, auf einer Seite der Abtriebswelle (34) gegenüber angeordnet ist, welche einen Drehmomentwandler (72,72A) haltert, der radial das Ende der Kurbelwellen/Kurbelwangen-Struktur (26,32) überlappt, wobei der Zylinderblock (28) derart geneigt ist, daß er das Differential (80,80A) von oben abdeckt, **dadurch gekennzeichnet,** daß das Getriebesystem und das Kupplungssystem des Automatikgetriebes (68,68A) in dem Differentialgehäuse (80B) aufgenommen sind, wobei eine Welle eines Paares von Achsenwellen (86A,86B) der Antriebsräder (24a,24b,100) sich durch dieses Getriebe- und Kupplungssystem nach außen erstreckt, während der Ausgang des Drehmomentwandlers (72,72A) dem Automatikgetriebe über einen Ketten- oder Getriebemechanismus (88) übertragen wird.

2. Mehrzylinder-Brennkraftmaschine nach Anspruch 1, **dadurch gekennzeichnet,** daß die Achse (A) des Differentials (80,80A) höher angeordnet ist als eine horizontale Ebene (B), die die Achse der Kurbelwelle (26) enthält.

3. Mehrzylinder-Brennkraftmaschine nach Anspruch 1, **dadurch gekennzeichnet,** daß die Achse (A) des Differentials (80,80A) tiefer angeordnet ist als eine horizontale Ebene (B), die die Achse der Kurbelwelle (26) enthält.

4. Mehrzylinder-Brennkraftmaschine nach Anspruch 1, **dadurch gekennzeichnet,** daß die Achse (A) des Differentials (80,80A) im wesentichen auf der gleichen Höhe angeordnet ist wie die Achse der Kurbelwelle (26) und mit der horizontalen Ebene (B) zusammenfällt, welche die Achse der Kurbelwelle (26) enthält.

## Revendications

1. Moteur à combustion interne (22) à plusieurs cylindres pour véhicules automobiles, devant être logé dans un compartiment moteur (10), selon un agencement transversal, sensiblement entre un couple de roues d'entraînement gauche et droite (24a, 24b, 100), un vilebrequin (26) s'étendant sensiblement perpendiculairement à la direction de déplacement du véhicule, transmettant la puissance de sortie du moteur audit couple de roues d'entraînement gauche et droite (24a, 24b, 100), via une boîte de vitesse (68, 68A) automatique et un mécanisme différentiel (80, 80A), et un arbre de sortie (34) qui est disposé parallèlement au vilebrequin (26) et est entraîné par le vilebrequin (26), dans lequel le mécanisme différentiel (80, 80A), par rapport à un plan vertical contenant l'axe du vilebrequin (26), est disposé d'un côté opposé' à l'arbre de sortie (34) qui, à son tour, supporte un convertisseur de couple (72, 72A) chevauchant radialement l'extrémité de la structure vilebrequin/joue de vilebrequin (26, 32), tandis que le bloc-cylindres (28) est incliné de manière à recouvrir le mécanisme différentiel (80, 80A) par au-dessus, caractérisé en ce que le système d'engrenage et le système d'embrayage de la boîte de vitesses automatique (68, 68A) sont logés dans le boîtier de différentiel (80B), un essieu d'un couple d'essieux (86A, 86B) des roues d'entraînement (24a, 24b, 100) s'étendent vers l'extérieur à travers lesdits systèmes d'engrenage et d'embrayage, tandis que la puissance de sortie du convertisseur de couple (72, 72A) est transmise vie une transmission automatique à chaîne ou des mécanismes à engreneges (88).

2. Moteur à combustion interne à plusieurs cylindres selon la revendication 1, caractérisé en ce que l'axe (A) du mécanisme différentiel (80, 80A) est disposé plus haut qu'un plan horizontal (B) contenant l'axe du vilebrequin (26).

3. Moteur à combustion interne à plusieurs cylindres selon le revendication 1, caractérisé en ce que l'axe (A) du mécanisme différentiel (80, 80A) est disposé plus bas qu'un plan horizontal (B) contenant l'axe du vilebrequin (26).

4. Moteur à combustion interne à plusieurs cylindres selon la revendication 1, caractérisé en ce que l'axe (A) du mécanisme différentiel (80, 80A) est disposé sensiblement à la même hauteur que l'axe du vilebrequin (26) coïncident avec un plan horizontal (B) contenant l'axe du vilebrequin (26).
